(19) Europäisches Patentamt
European Patent Office
Office européen des brevets

(11) **EP 1 879 192 A1**

(12) **EUROPEAN PATENT APPLICATION**

(43) Date of publication:
**16.01.2008 Bulletin 2008/03**

(51) Int Cl.:
***G11B 20/10*** *(2006.01)*

(21) Application number: **07010402.1**

(22) Date of filing: **24.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **14.07.2006 US 807370**
**30.04.2007 US 742033**

(71) Applicant: **Broadcom Corporation**
**Irvine, CA 92617 (US)**

(72) Inventors:
• **Bliss, William**
**Irvine, CA 92617 (US)**
• **She, Sian**
**Irvine, CA 92617 (US)**

(74) Representative: **Jehle, Volker Armin**
**Patentanwälte**
**Bosch, Graf von Stosch, Jehle,**
**Flüggenstrasse 13**
**80639 München (DE)**

(54) **Base line controller electronics architecture**

(57)    According to an aspect of the invention, a method to lock data PLL frequency within a Hard Disk Drive (HDD) comprises:
receiving an analog waveform wherein the analog waveform contains representations of synchronization marks read from physical media;
determining a period between synchronization marks within physical media of the HDD;
determining an update rate having both a phase and frequency, wherein the update rate is based on the period between synchronization marks; and
sampling data from the analog waveform based on the update rate.

FIG. 10

**Description**

TECHNICAL FIELD OF THE INVENTION

The present invention relates generally to hard disk drives.

BACKGROUND OF THE INVENTION

The structure and operation of hard disk drives is generally known. Hard disk drives include, generally, a case, a hard disk having magnetically alterable properties, and a read/write mechanism including Read/Write (RW) heads operable to write data to the hard disk by locally alerting the magnetic properties of the hard disk and to read data from the hard disk by reading local magnetic properties of the hard disk. The hard disk may include multiple platters, each platter being a planar disk.

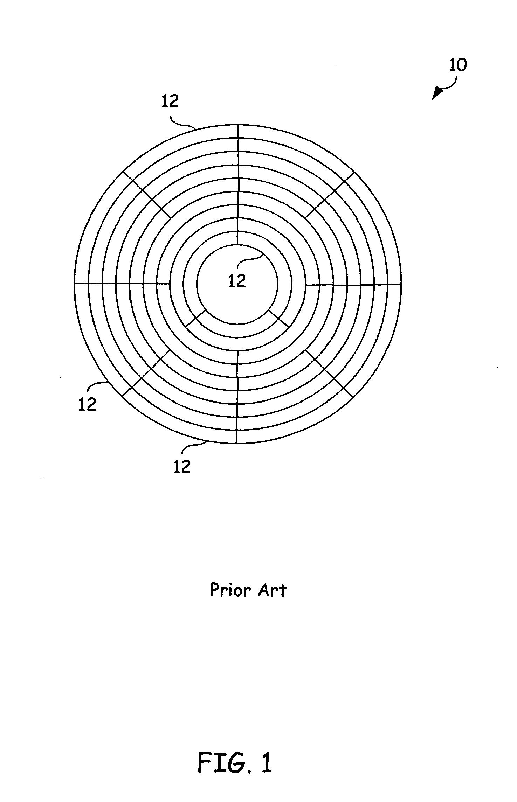

All information stored on the hard disk is recorded in tracks, which are concentric circles organized on the surface of the platters. FIG. 1 depicts a pattern of radially-spaced concentric data tracks 12 within a disk 10. Data stored on the disks may be accessed by moving RW heads radially as driven by a head actuator to the radial location of the track containing the data. The track-based organization of data on the hard disk(s) allows for easy access to any part of the disk, which is why hard disk drives are called "random access" storage devices.

Since each track typically holds many thousands of bytes of data, the tracks are further divided into smaller units called sectors. This reduces the amount of space wasted by small files. Each sector holds 512 bytes of user data, plus as many as a few dozen additional bytes used for internal drive control and for error detection and correction.

Typically, these tracks and sectors are created during the low level formatting of the disk. This low level formatting process creates the physical structures (tracks, sectors, control information) on the disk. Normally, this step begins with the hard disk platters containing no information. Newer disks use many complex internal structures, including zoned bit recording to put more sectors on the outer tracks than the inner ones, and embedded servo data to control the head actuator. Newer disks also transparently map out bad sectors. Due to this complexity, all modern hard disks are low-level formatted at the factory for the life of the drive.

This low level formatting is usually performed using external servo writers that write the physical structures to disk 10 during manufacturing. Accurate positioning of the physical structures is achieved within the external servo writer by accurately controlling the RW head position within the external servo writer. External servo writers, because of the high degree of positioning accuracy required, have become an expensive processing bottleneck during the hard disk drive manufacturing.

Self servo writing (SSW) attempts to overcome this expensive and time-consuming bottleneck. External servo writers write a first magnetic reference pattern (servo pattern) on the surface of the disk. The disk may then be assembled into a hard disk drive, where the LLF is initially performed within the hard disk drive. In SSW, the LLF is completed within the hard disk drive without using additional external hardware. The LLF uses the servo pattern written by the external servo writer to create the physical structures on the disk.

SSW first has a servo-writer move the head at constant speed to write spirals from Inner Diameter (ID) to Outer Diamond (OD). The spirals are repeating patterns of sine wave bursts and spiral sync marks (SSM). The bursts are used to derive Position Error Signal (PES). The sync marks are used to derive timing to drive a Disk Lock Clock (DLC) system so that when it has locked, spirals are read and final servo patterns are written synchronously. Traditionally, servo-writer will write a certain number of tracks called seed wedges either in ID or OD so that track number and wedge number are established during startup.

Firmware then may keep track of track number and wedge number as the head is positioned. Any disturbance during the servo writing process when the head is not on seed wedges will result in loss of position information. The servo-writing process has to start all over again. Also, seed wedges are at least as long as the final servo pattern and could be longer to give better quality samples during startup. Using the servo-writer to write these seed wedges is costly as this process is done in a clean room where spirals are written. In addition, in order for SSW to work, the DLC is assumed to have acquired and locked to disk variations.

During most SSW processes, the position of the RW heads may drift from their targeted position. This drift may introduce a position error following completion of the SSW process. Further, since the position of each subsequent radial track may depend on the position of the previously written track, this position error can accumulate during the SSW process. Therefore, the accumulation of positioning errors should be addressed such that the position errors accumulated during the SSW process may be reduced or eliminated.

Further limitations and disadvantages of conventional and traditional SSW processes and related functionality will become apparent to one of ordinary skill in the art through comparison with the present invention described herein.

## SUMMARY OF THE INVENTION

Embodiments of the present invention are directed to systems and methods that are further described in the following description and claims. Advantages and features of embodiments of the present invention may become apparent from the description, accompanying drawings and claims. Embodiments of the present invention provide a method of adapting analog pole canceller and method of adapting decision feedback baseline error canceller using power spectral density measurement and balancing. The system consists of two low frequency power spectrum meters, one centered at a very low frequency around (and typically below) the 3dB point of the preamp AC pole, and the second typically a small number of octaves above that frequency. The parameter of control (AC zero or DFB 'pole' respectively) is servoed so that the two power spectrums are equal. This decision balance point can be skewed a priori to match any known power spectrum shaping of a modulation code (e.g., RDS code), or any expected difference to PRML target, etc. According to an aspect of the invention, a method is provided to lock data PLL frequency within a Hard Disk Drive (HDD) comprising:

receiving an analog waveform wherein the analog waveform contains representations of synchronization marks read from physical media;
determining a period between synchronization marks within physical media of the HDD;
determining an update rate having both a phase and frequency, wherein the update rate is based on the period between synchronization marks; and
sampling data from the analog waveform based on the update rate.

Advantageously:

a data PLL comprising a delta-sigma modulator PLL wherein the servo PLL receives a digital word as an input
a servo PLL comprising a delta-sigma modulator PLL wherein the servo PLL receives a digital word as an input.

Advantageously, determining a period between synchronization marks comprises measuring the period between time of arrival (TOA) of the synchronization marks.
Advantageously, pruning the set of allowable bit sequences based on knowledge of the bit sequence further comprises:

pruning the set of allowable bit sequences based on the preamble, wherein the preamble comprises predetermined bit sequences;
pruning the set of allowable bit sequences based on the synchronization mark, wherein the synchronization mark comprises predetermined bit sequences;
pruning the set of allowable bit sequences based on parity of at least one data code word within the data; and
pruning the set of allowable bit sequences based on the post amble, wherein the post amble comprises predetermined bit sequences.

Advantageously, wherein pruning the set of allowable bit sequences based on the preamble further comprises pruning based on parity of the preamble.
Advantageously, pruning the set of allowable bit sequences based on parity of at least one data code word within the data further comprises pruning the set of allowable bit sequences based on parity of a plurality of data code words within the data.
Advantageously, pruning comprises reprioritizing non allowable bit sequences within the set of allowable bit sequences as being a large distance from the ideal bit sequence.
Advantageously, performing the timing recovery further comprises:

determining a chunk phase within the estimated bit sequence; and
determining a primary chunk phase within the estimated bit sequence.

Advantageously, the estimated bit sequence is read from the read channel within a hard disk drive (HDD).
Advantageously, the bit sequences are written longitudinally or perpendicularly within the HDD.
According to an aspect of the invention, a method to limit inter-symbol interference (ISI) within a hard disk drive (HDD) read channel is provided, comprising:

reading an estimated bit sequence from the read channel, wherein the estimated bit sequence comprises:

a preamble, synchronization mark, data and post amble;

determining a set of allowable bit sequences;

performing a timing recovery within the estimated bit sequence to determine a location of within the estimated bit sequence;

pruning the set of allowable bit sequences based on knowledge of the bit sequence; and

comparing the estimated bit sequence to the set of allowable bit sequences to select a decoded bit sequence.

Advantageously, pruning the set of allowable bit sequences based on knowledge of the bit sequence further comprises:

pruning the set of allowable bit sequences based on the preamble, wherein the preamble comprises predetermined bit sequences;

pruning the set of allowable bit sequences based on the synchronization mark, wherein the synchronization mark comprises predetermined bit sequences;

pruning the set of allowable bit sequences based on parity of at least one data code word within the data; and

pruning the set of allowable bit sequences based on the post amble, wherein the post amble comprises predetermined bit sequences.

Advantageously, pruning the set of allowable bit sequences based on the preamble further comprises pruning based on parity of the preamble.

Advantageously, pruning the set of allowable bit sequences based on parity of at least one data code word within the data further comprises pruning the set of allowable bit sequences based on parity of a plurality of data code words within the data.

Advantageously, pruning comprises reprioritizing non allowable bit sequences within the set of allowable bit sequences as being a large distance from the ideal bit sequence.

Advantageously, performing the timing recovery further comprises:

determining a chunk phase within the estimated bit sequence; and

determining a primary chunk phase within the estimated bit sequence.

Advantageously, comparing the estimated bit sequence to the set of allowable bit sequences to select a decoded bit sequence comprises applying a Viterbi Algorithm to produce the decoded bit sequence.

Advantageously, the bit sequences are written longitudinally or perpendicularly within the HDD.

Advantageously, the post amble comprises a high frequency bit pattern having a low DC content.

Advantageously, comparing the estimated bit sequence to the set of allowable bit sequences to select a decoded bit sequence further comprises:

computing a distance between each allowable bit sequence and the ideal bit sequence;

weighting each allowable bit sequence based on the computed distance; and

selecting the decoded bit sequence from the set of allowable bit sequence based on the weights of each allowable bit sequence.

According to an aspect of the invention, a disk drive controller comprises:

a read channel operable to read data from storage media;

a data path operable to produce decoded bit sequences from the read channel;

a second interface operable to write the decoded bit sequences to an external device; and

wherein the data path is operable to:

receive an estimated bit sequence comprising a preamble, synchronization mark, data and post amble;

determine a set of allowable bit sequences;

perform a timing recovery within the estimated bit sequence to determine a location within the estimated bit sequence;

prune the set of allowable bit sequences based on knowledge of the ideal bit sequence; and

compare the estimated bit sequence to the set of allowable bit sequences to select the decoded bit sequence.

Advantageously, the data path pruning the set of allowable bit sequences based on knowledge of the bit sequence further comprises:

pruning the set of allowable bit sequences based on the preamble, wherein the preamble comprises predetermined bit sequences;

pruning the set of allowable bit sequences based on the synchronization mark, wherein the synchronization mark comprises predetermined bit sequences;

pruning the set of allowable bit sequences based on parity of at least one data code word within the data; and

pruning the set of allowable bit sequences based on the post amble, wherein the post amble comprises predetermined bit sequences.

Advantageously, pruning the set of allowable bit sequences based on the preamble further comprises pruning based on parity of the preamble.

Advantageously, pruning the set of allowable bit sequences based on parity of at least one data code word within the data further comprises pruning the set of allowable bit sequences based on parity of a plurality of data code words within the data.

Advantageously, the data path prunes by reprioritizing non allowable bit sequences within the set of allowable bit sequences as being a large distance from the ideal bit sequence.

Advantageously, the data path compares the estimated bit sequence to the set of allowable bit sequences to select a decoded bit sequence by applying a Viterbi Algorithm to produce the decoded bit sequence.

Advantageously, the bit sequences are written longitudinally or perpendicularly within a hard disk drive HDD.

Advantageously, the post amble comprises a high frequency bit pattern having a low DC content.

Advantageously, comparing the estimated bit sequence to the set of allowable bit sequences to select a decoded bit sequence further comprises:

computing a distance between each allowable bit sequence and the ideal bit sequence;

weighting each allowable bit sequence based on the computed distance; and

selecting the decoded bit sequence from the set of allowable bit sequence based on the weights of each allowable bit sequence.

BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:

FIG. 1 depicts a pattern of radially-spaced concentric data tracks within the magnetic media of a disk;

FIG. 2 is a system diagram of an external servo writer;

FIG. 3 depicts a disk which has had a first magnetic pattern written to the disk using external servo writer;

FIG. 4 depicts a spiral reference pattern;

FIG. 5 illustrates how the amplitude of a detected signal changes as the read path intersects the spiral track;

FIG. 6 depicts how gray code (i.e. track number information) may be embedded within a spiral track in accordance with an embodiment of the present invention;

FIG. 7 depicts the read back signal containing gray code information located within a football in accordance with an embodiment of the present invention;

FIG. 8 depicts adjacent tracks containing gray coded information in accordance with an embodiment of the present invention;

FIG. 9 depicts a pattern of bits used to indicate gray code information in accordance with an embodiment of the present invention;

FIG. 10 depicts a hard disk drive that includes a control circuitry, a hard disk, an actuator, a RW head and positioning arm in accordance with an embodiment of the present invention;

FIG. 11 is a functional block diagram of a disk controller in accordance with an embodiment of the present invention;

FIG. 12 provides a logic flow diagram illustrating a method operable to define magnetic reference patterns within magnetic media in accordance with an embodiment of the present invention; and

FIG. 13 provides a logic flow diagram illustrating a method operable to define sectors and tracks within magnetic media in accordance with an embodiment of the present invention;

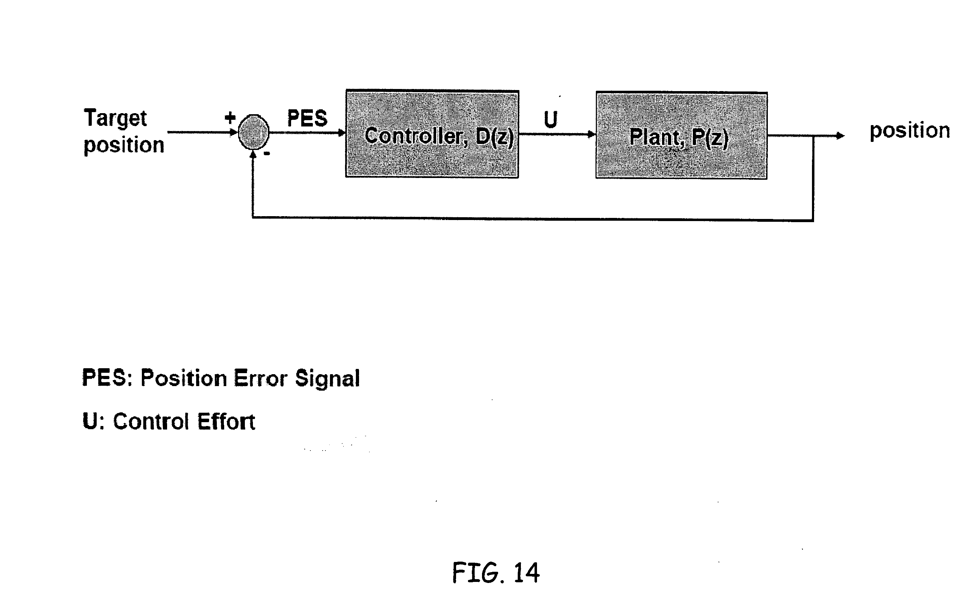

FIG. 14 provides a functional diagram of a spindle frequency run-out cancellation module in accordance with an embodiment of the present invention;

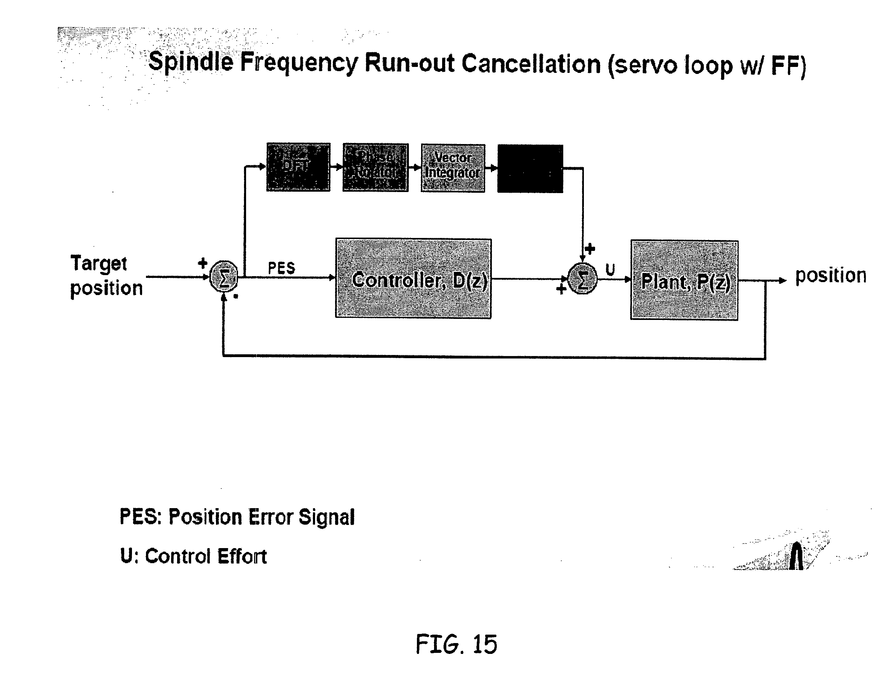

FIG. 15 provides a functional diagram of a spindle frequency run-out cancellation module with feed forward in accordance with an embodiment of the present invention;

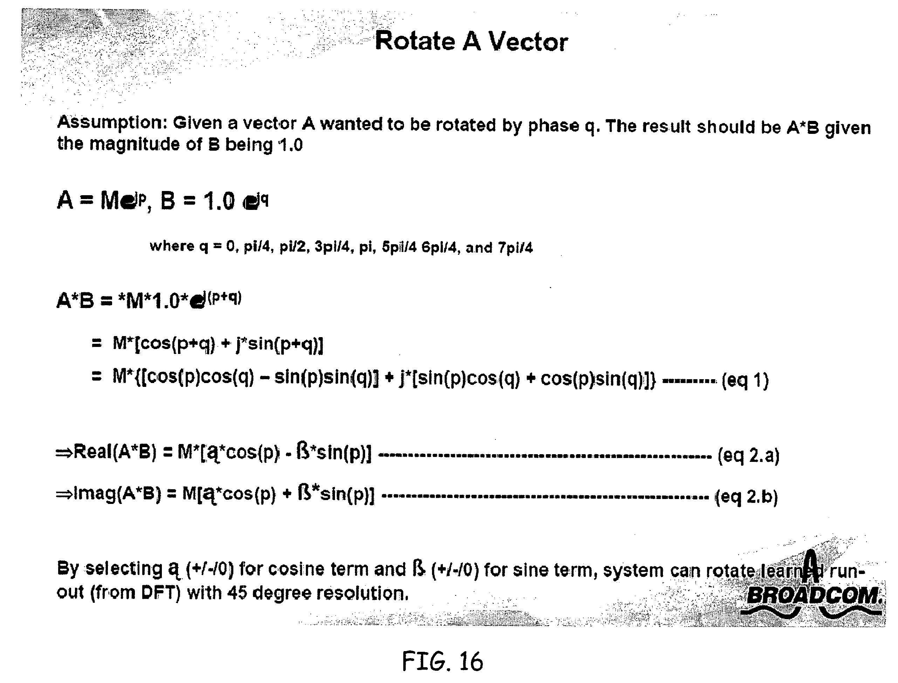

FIG. 16 describes how a vector may be rotated in accordance with an embodiment of the present invention;

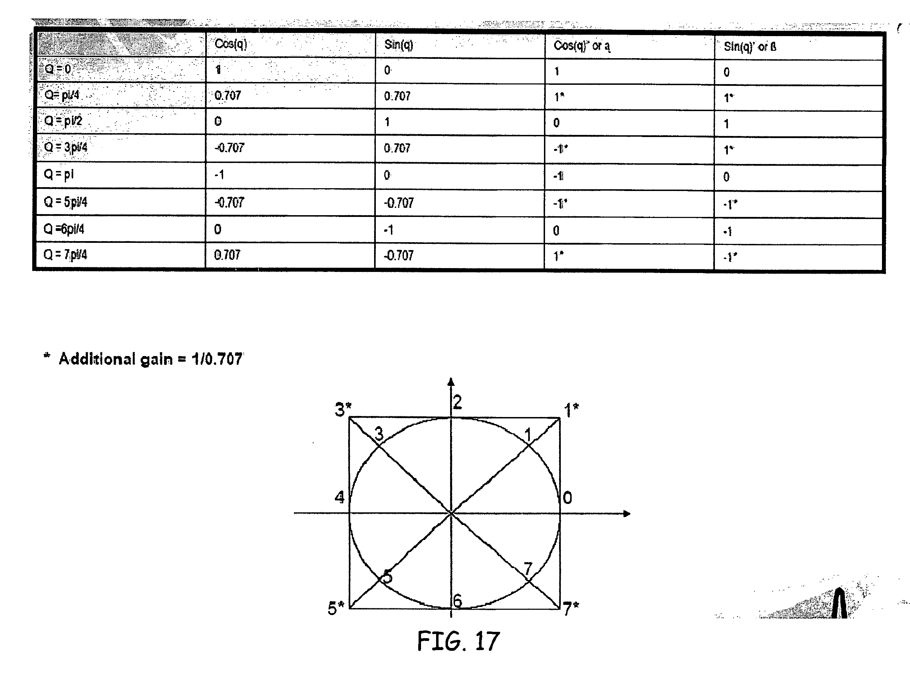

FIG. 17 provides a table in accordance with an embodiment of the present invention;

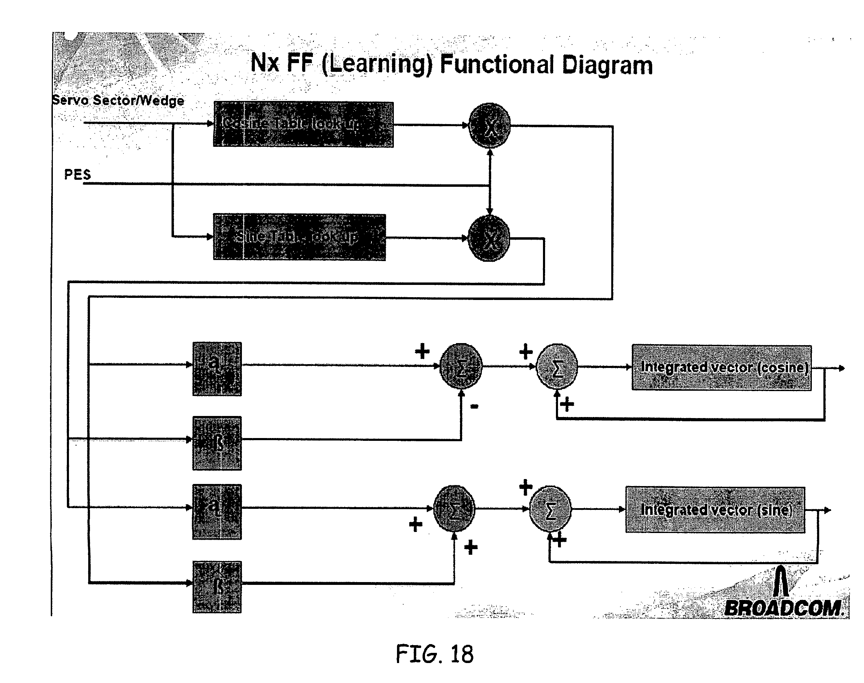

FIG. 18 provides an NxFF learning functional diagram in accordance with an embodiment of the present invention;

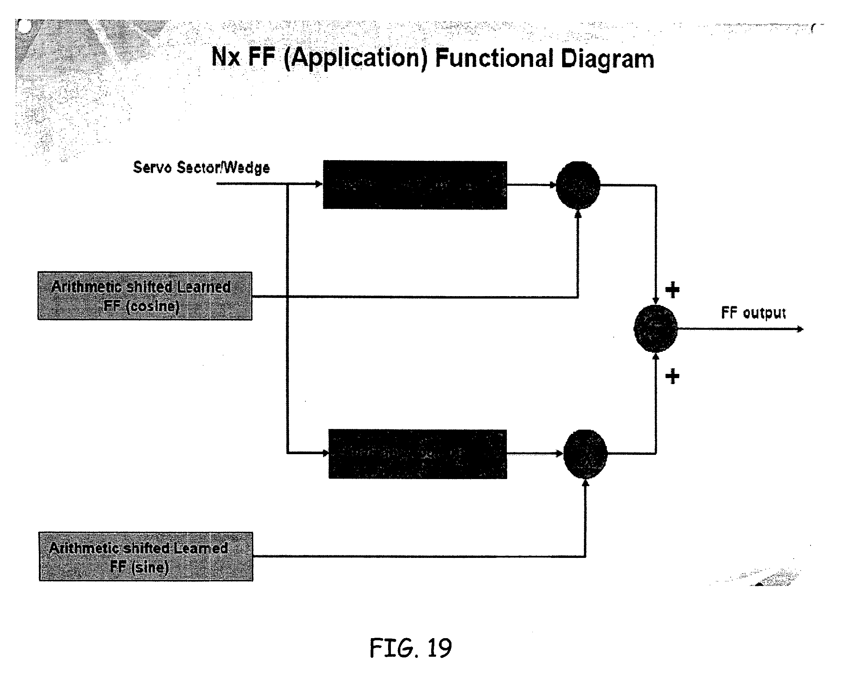

FIG. 19 provides an NxFF functional diagram in accordance with an embodiment of the present invention;

FIG. 20 provides a block diagram in accordance with embodiments in present invention of a baseline correction (BLC) architecture in accordance with embodiments of the present invention;

FIG. 21 provides a block diagram of decision feedback equalizer in accordance with embodiments of the present invention;

FIG. 22 provides a feed forward filter in accordance with embodiments of the present invention;

FIG. 23 provides a block diagram and an error feedback module in accordance embodiment of the present invention;

FIG. 24 provides a block diagram of zero offset start in accordance with embodiments of the present invention; and

FIG. 25 provides a block diagram of the baseline correction module or servo in accordance an embodiment of the present invention.

## DETAILED DESCRIPTION OF THE INVENTION

Preferred embodiments of the present invention are illustrated in the FIGs., like numerals being used to refer to like and corresponding parts of the various drawings.

Prior technology does not support the RRO cancellation on high spindle frequency because the servo system goes unstable as Feed-Forward applying control effort to correct the high spindle frequency run-out. Embodiments of the present invention include a phase rotator tomaintain the stability of the system. This invention allows system designer to select one of the eight phase to do phase rotation. It's 0, 45, 90, 135, 180, 225, 270, or 315 degree.

Feed-Forward cancellation has been used for cancel Hard Disk Drive Repeat Run-out does not need to rotate the phase of the learned PES. As the RPM and the TPI of the Hard Disk Drive goes higher, system designers need to increase the frequency of the applied cancellation. For example, it needs to run up to eight time (or even higher) of the spindle motor running frequency. To make spindle frequency RRO Feed-Forward cancellation system working at high frequency, system designers need to add a phase rotator into the FeedForward cancellation algorithm or into the Feed-Forward cancellation Hardware in order to maintain the stability of the servo system. This phase rotator however cost many multiply and summing operations to implement (refers the equation 1 inside attached file). This invention offer a way to implement this phase rotator without doing multiply (refers to the equation 2.a and 2.b inside the attached file). Therefore it reduces the usage of the micro-processor execution time when it's implemented by Firmware. Or it reduces the usage of the HW mulitpyer when it's implemented by Hardware. Therefore, this invention reduces the cost and or the power consumption of the system.

By positioning the RW head using the velocity and phase error, the disk controller control the velocity and phase (i.e. location) of the RW head relative to the first magnetic reference pattern. This type of positioning reduces or eliminates accumulated position errors associated with prior SSW processes that accumulated position errors while performing the SSW process. The reduction or elimination of position errors results in a higher quality definition of physical structures (i.e. sectors and tracks) within the hard disk that may ultimately result in both lower product cost and high product yield.

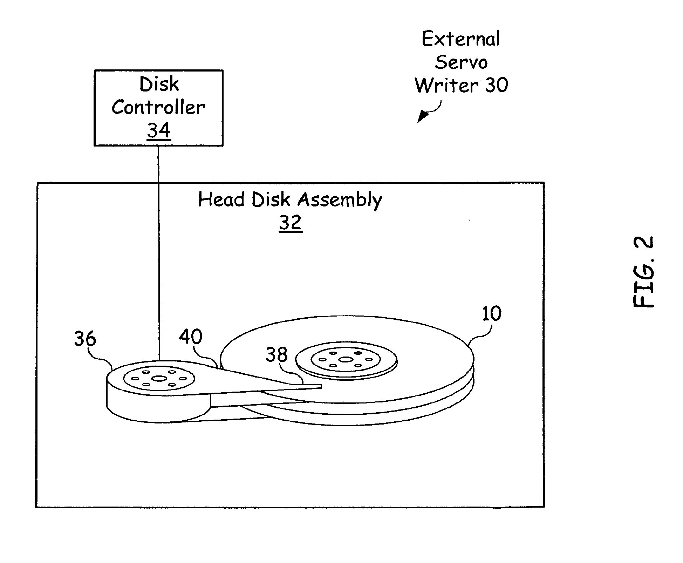

FIG. 2 is a system diagram of an external servo writer 30. External servo writer 30 includes a head disk assembly 32, Disk controller 34, actuator 36, and RW head 38 located at the distal end of arm 40. Disk controller 34 may determine the first magnetic reference pattern (servo pattern) to be written onto disk 10. Disk controller 34 may function as a disk controller operable to direct the positioning of a RW head 38 over disk 10 with the use of a precision positioning system such as, but not limited to a laser guided positioning system. Embodiments of the present invention eliminate the need of seed wedges. Seed wedges typically contain location information. By placing location information (i.e. track number) within a spiral sync mark (SSM), time and cost in the clean room precise servo-writing process can be reduced. Also, in case of any disturbance while servo-writing the final patterns, track number and wedge number can be easily recovered so the system may return to a lock state and the servo writing process can continue. This eliminates the prior need to start the process all over again. Additionally, this process is format efficient, and does not require writing extra patterns in the spirals. The accuracy of the process may be adjusted arbitrarily by tuning hardware and software detection parameters.

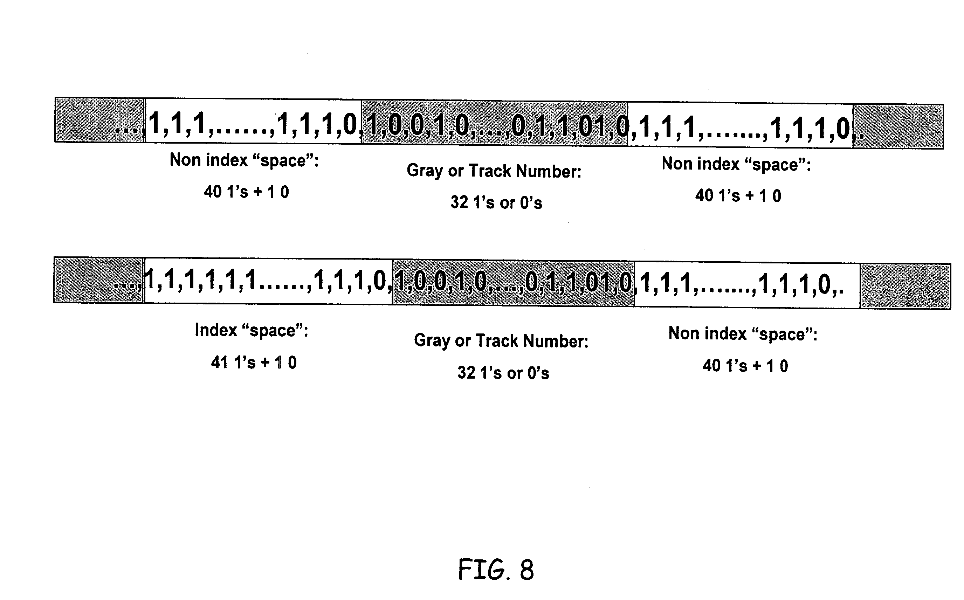

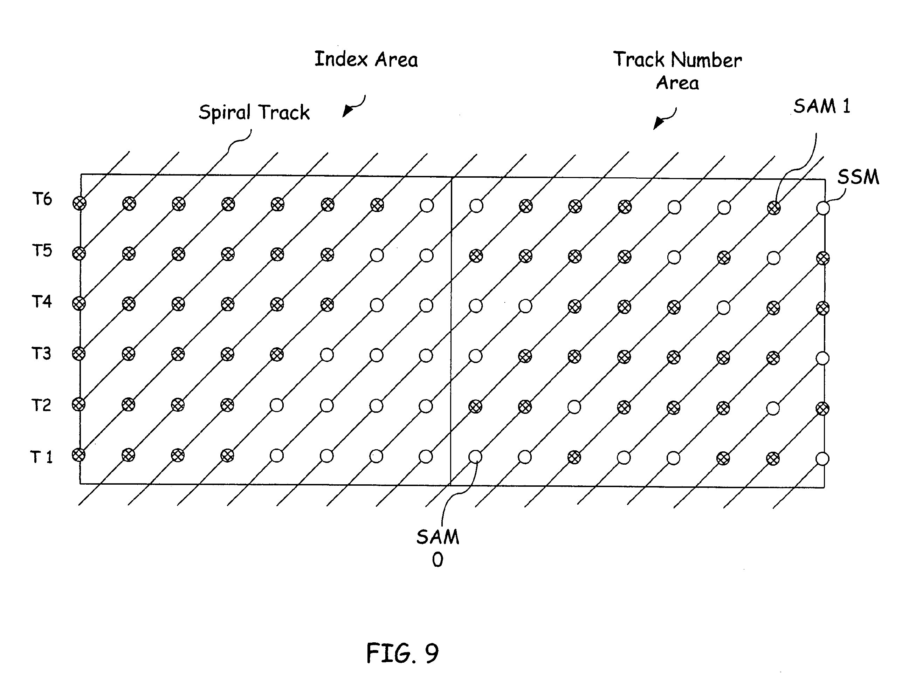

Embodiments of the present invention uses two or more SSM's to indicate track number and index position. The present invention is flexible in a sense that if there are only two SSM's available, index position can still be encoded onto each track. And if more SSM's are available, they are used such that center of track and index position are uniquely marked with the SSM's. Fault tolerance is improved where multiple track numbers can be written on each track and error detection codes can be applied on the track numbers. This is possible because no format overhead is required to write this extra information. Accurate track number tracking is possible even when the head is seeking from one track to the next because the track numbers across adjacent tracks can be gray coded as will be described with reference to FIGs. 8 and 9.

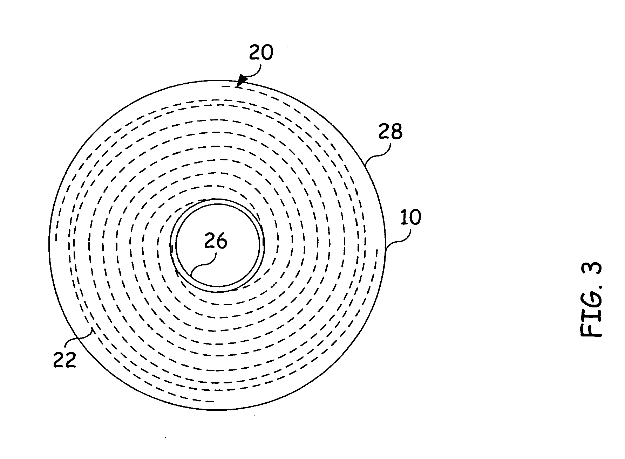

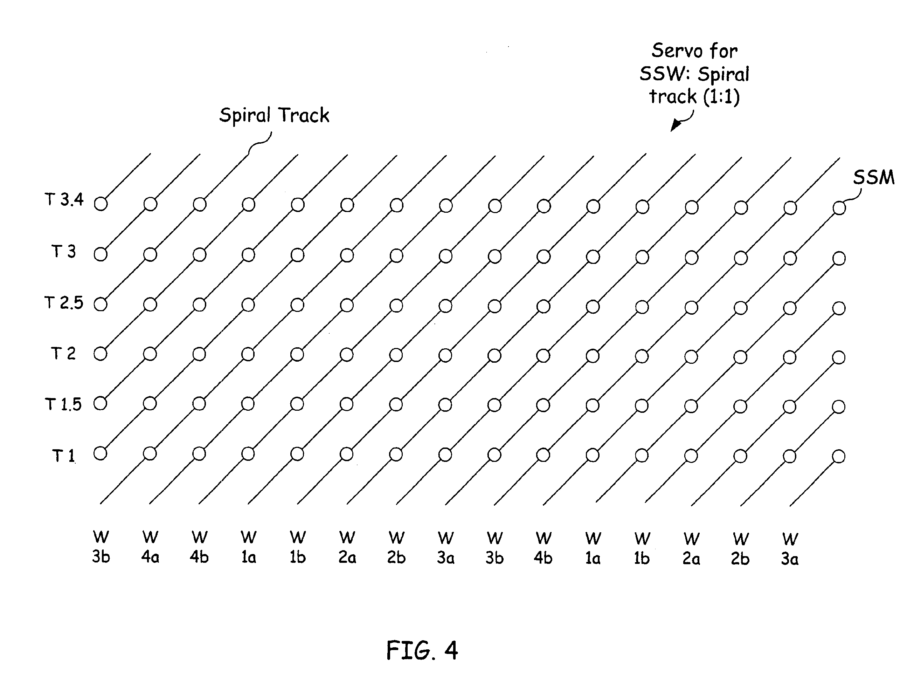

FIG. 3 depicts a disk 10 which has had a first magnetic pattern 20 written to the disk using external servo writer 30. Here, first magnetic pattern 20 is depicted as a plurality of spirals 22 that each contains a further plurality of servo setter marks or spiral sync marks (SSM) 24 as depicted if FIG. 4. This pattern may be written either from the inner diameter 26 to outer diameter 28 or from outer diameter 28 to inner diameter 26.

Each spiral pattern 20, as well as the slope of each spiral pattern, is selected such that the external servo writer can process disk 10 in a shorter period of time as compared to the time required to write a complete set of concentric tracks as depicted in FIG. 1. Additionally, the spiral reference pattern 20 selected should avoid or minimize positioning errors inherent in writing the spiral reference pattern or other first magnetic pattern on disk 10. Disk 10 may be removed from the external servo writer 30 and placed within a conventional hard disk drive 50 to create the physical structures depicted in FIG. 1 (i.e. tracks and sectors) on the disk.

Most SSW processes utilize a clock or timing circuit to compare the football to football (FTF) time between spirals, wherein a position error may be generated based on the error between the expected time between spirals and the FTF. This requires an accurate clock circuit to provide a timing signal with which to determine the timing error. Embodiments of the present invention are able to eliminate the need for the clock circuit by measuring both the FTF and a track center error (TCE) wherein the TCE represents a phase error. The velocity signal and phase error signal when combined allow the disk controller to accurately determine the position of the RW head given knowledge of the spiral servo pattern on the disc.

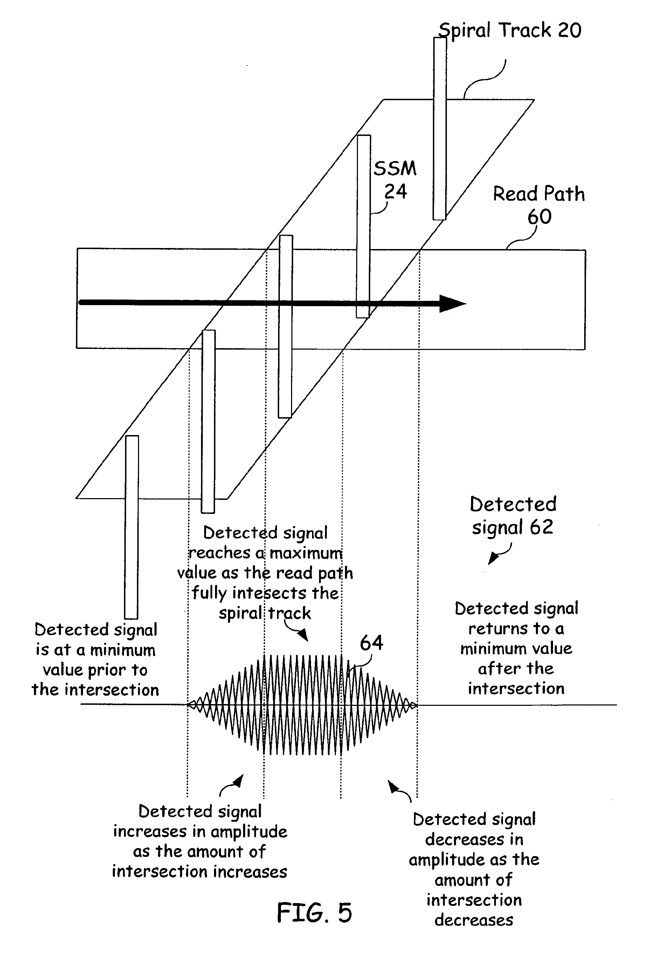

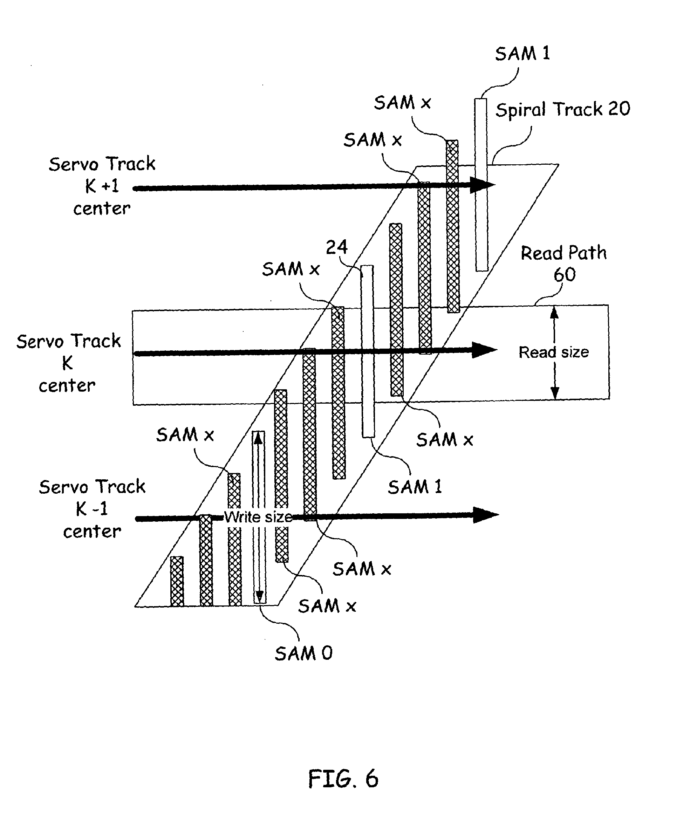

FIG. 5 and FIG. 6 describe various timing components that may be measured as the read path 60 intersects a spiral track 20. As the RW head follows the read path 60, the read path 60 intersects a number of spirals tracks 20 written to the disk. The amplitude of the signal detected by the RW head is shown as detected signal 62. Prior to the intersection of the read path and the spiral track, the amplitude of the detected signal is a minimal or nominal value. As read path 60 intersects the spiral track 20, the amplitude of the detected signal 62 increase until the read path is located entirely over the spiral track. At this point, the amplitude of the detected signal will reach a maximum value. This maximum value may continue until the read path coverage of the spiral track decreases. During this time, the amplitude of the detected signal 62 returns to the minimal or nominal value. These amplitude changes within detected signal 62 are shown in the timing diagram beneath the intersection of the read path for the spiral track. The amplitude of detected signal 62 forms a diamond or football-like shape 64.

To determine the phase error associated with the read path, it is important to determine the track center error (TCE) which is the difference in time and location and between the SSM located within the spiral track and the center of the diamond or football-like shape 64 formed as the read path intersects the spiral track. Ideally, the SSM should be detected at the center of the diamond or football-like shape 64. FIG. 5 provides a timing diagram that first shows the amplitude of the detected signal 62 wherein a diamond or football-like shapes 64 are formed as the read path 60 intersects a series of spiral tracks 20. Located within these spiral tracks are SSMs 24. These SSMs provide an additional signal that may be used to determine the phase error. This phase error is the difference between the center of the diamond or football-like shapes 64 and the location of the detected SSMs.

One embodiment of the present invention may utilize a simple, robust, flexible method with no format overhead to record and detect track number and index position to enhance efficiency of SSW. Typically, there are two spirals per wedge to wedge. So, the number of spirals is twice the number of wedges. The RW head usually detects and locks on the even or the odd set of spirals and switches between the two sets when appropriate. When the RW head on a track intercepts a spiral, the read back signal looks like a football shape profile as shown in Fig 5. Typically, there are a number of SSM's and spiral bursts within one football profile.

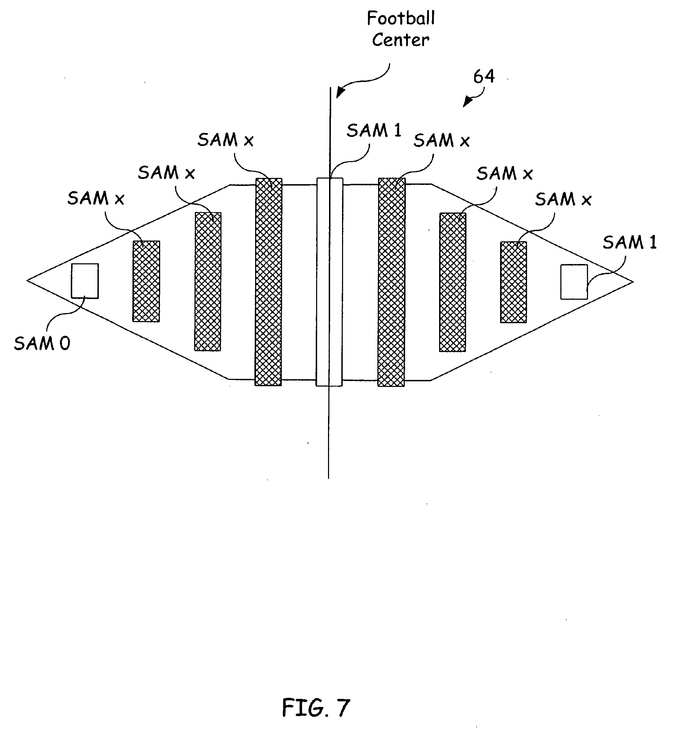

In FIG. 6, two SSM patterns are designated to represent a "1" (SAM1) and a "0" (SAM0). Track number is recorded 1 bit per spiral. An N-bit track number is recorded on N spirals in the even set and the odd set. So no matter which set the head is using, the track number can be read. As shown in FIG. 7, the SSM in the center of the football 64 indicates "1" or "0" for the track number bit. Even if the head is off track by a certain amount, the adjacent SSM is read but it is still correct. When there are three available SSM's, two SSM patterns are again designated as "1" (SAM1) and "0" (SAM0) and are written at the track centers. The third SSM is called SAMx and are written at all the locations which are not track centers. The SSM in the center of the football indicates a "1" or a "0" for the track number bit. If the head is off track by a certain amount, the SAM1 or SAM0 pattern will move forward or backward in the football but it still indicates the track number bit correctly. The advantage of this scheme is that the track center is marked and in the read back football signal, the amount of off track can be calculated from the distance of SAM1 or SAM0 from the center of the football. This also makes the timing error calculation simpler as there is no ambiguity which SSM should be used to derive the timing error signal.

In order to know precisely where the first bit of track number is, a starting pattern preceding the track number is recorded. This pattern is illustrated in FIGs. 8 and 9. FIG. 8 depicts a pattern of bits used to indicate gray code information in accordance with an embodiment of the present invention while FIG. 9 depicts adjacent tracks containing gray coded information in accordance with an embodiment of the present invention. This starting pattern located within the index area is designed to be an invalid track number and will never occur inside the gray or track number area. A pattern of 41 bits (40 "1" and 1 "0") may be chosen in one embodiment as the starting pattern as the track number will never exceed 40 bits. If a forth SSM is available, it can be used as index mark to indicate angular position. If it is not available, a 42 bit starting pattern (41 "1" and 1 "0") is used as index pattern.

Adjacent track numbers can be gray coded so that when the head is seeking from one track to the next, there is at most one track number bit error. This single bit error can be easily corrected by either reading the extra track number on a single track or by using the track number of previous track. Every four track lines up in the radial direction. So for a group of four tracks, the gray coded track numbers of the first and second tracks and the gray coded track numbers of the second and third tracks line up in the same direction. The gray coded track numbers of the third and fourth tracks line up in the opposite direction. The net effect is that all the track numbers stay on the same band from ID to OD. This makes index pattern writing and reading easy.

On a track number bit level, the length of the SSM and the SSM hardware detection tolerance can be optimized to trade off false detection versus miss detection. For the whole track number, parity code or error correcting code like Hamming code can be applied to enhance robustness of track number detection. Multiple track numbers are written on each track so the system can make use of this redundant information to enhance robustness.

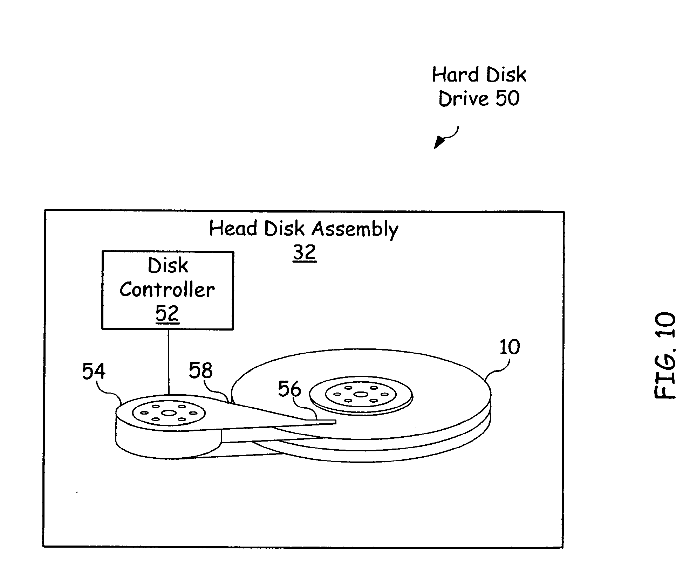

FIG. 10 depicts a hard disk drive 50 that includes disk controller 52, hard disk (magnetic media) 10, actuator 54, RW head 56 and positioning arm 58. Disk controller 52 as shown in FIG. 6 includes an interface module 61, processing module 63 and memory module 65. Disk Controller 52, which may be implemented as an integrated circuit or series of discrete components, may interface with a host computer system and direct the operation of the other internal components within hard disk drive 50.

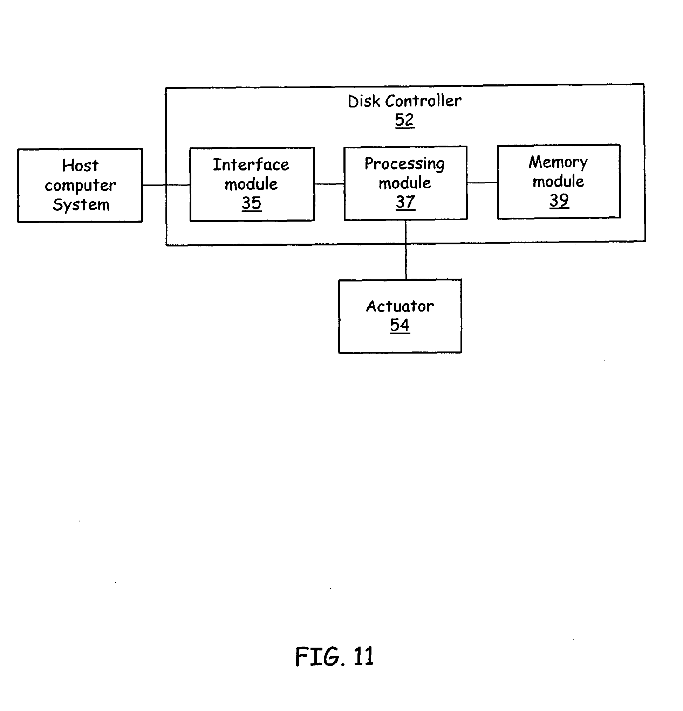

Processing module 63 may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. Memory module 65 may take the form of a single memory device or a plurality of memory devices. Such a memory device may be a read-only memory, random access memory, volatile memory, nonvolatile memory, static memory, dynamic memory, flash memory, cache memory, and/or any device that stores digital information. Note that when the Disk controller 52 implements one or more of its functions via a state machine, analog circuitry, digital circuitry, and/or logic circuitry, the memory storing the corresponding operational instructions may be embedded within, or external to, the circuitry comprising the state machine, analog circuitry, digital circuitry, and/or logic circuitry. Processing module 63 stores and executes operational instructions corresponding to at least some of the steps and/or functions illustrated with reference to FIGs. 10 and 11.

Disk controller 52 may compute a position error for RW head 56 with respect to a circular trajectory in response to the first reference magnetic pattern 20. This pattern contains track number information. More specifically, control circuitry 52 is operable to determine the position of the RW head 56 by sensing both the velocity and phase of RW head 56 relative to SSMs 24 contained within the first magnetic reference pattern. In this method, the hard disk drive controller generates a FTF error signal and a TCE signal. These two signals provide a feedback signal used to control velocity and phase of RW head 56 relative to SSMs 24. Therefore enabling or facilitating the exact positioning of RW head 56 relative to the first magnetic pattern. Since this methodology uses the SSMs of the first reference pattern to position RW head 56 when defining the second magnetic reference pattern, cumulative positioning errors are avoided and the need for seed wedges is reduced or eliminated. These cumulative positioning errors occur when the RW head is positioned during the SSW process based on previously written servo tracks. Positioning the RW head based on the SSM during the SSW process reduces or eliminates the positioning error of the RW head during the SSW process, resulting in a more accurate positioning of the servo tracks on the drive which will ultimately result in a higher quality end product at a lower cost.

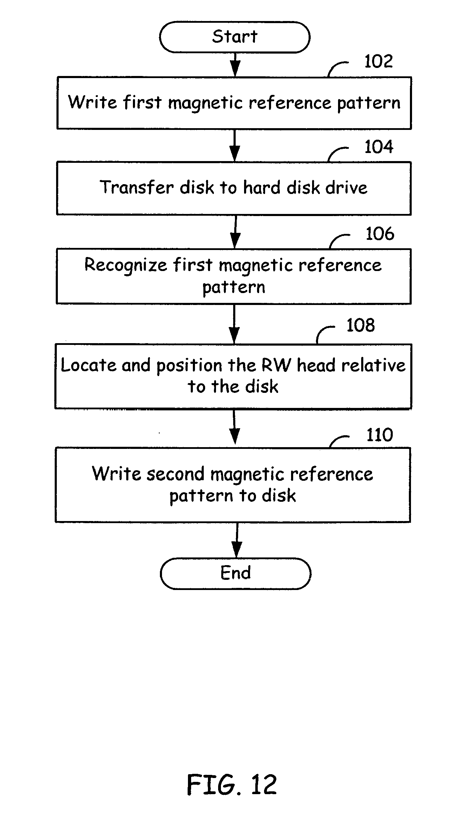

FIG. 12 provides a logic flow diagram in accordance with one embodiment of the present invention. This process involves first writing a first magnetic reference pattern, such as a spiral reference pattern containing gray coded SSMs, using a servo writer in step 102. After this first magnetic pattern has been written to a disk in the servo writer, the disk may be transferred to a hard disk drive in step 104. The control circuitry or hard disk controller within the hard disk drive will recognize the first magnetic reference pattern and track locations as evidenced by gray coded SSMs in step 106. Control circuitry is operable to direct the positioning of the RW head within the hard disk drive based on the first magnetic reference pattern. This first magnetic reference pattern may, for example, be a spiral reference pattern that includes a number of SSM marks which will be used to accurately determine the position of the RW head relative to the disk in step 108. The RW head within the hard disk drive is used to write a second magnetic pattern to the disk in step 110. This second magnetic reference pattern may include a series of radially-spaced concentric tracks and sectors within the tracks.

The positioning of the RW head during the writing of the second magnetic reference pattern to the disk may be determined based on the velocity and phase between the RW head and the SSMs of the first magnetic reference pattern. The second magnetic reference pattern defines sectors and tracks within the disk wherein data may be stored and organized within the sectors and tracks of the disk. Additionally, the first magnetic reference pattern may be overwritten by the second magnetic reference pattern during this process. Should an error or disturbance occur while servo-writing the final patterns, track number and wedge number can be easily recovered so the servo writing process can continue by determining location from the gray coded SSMs. There is no need to start all over again. The present invention is format efficient as it does not require writing extra patterns in the spirals.

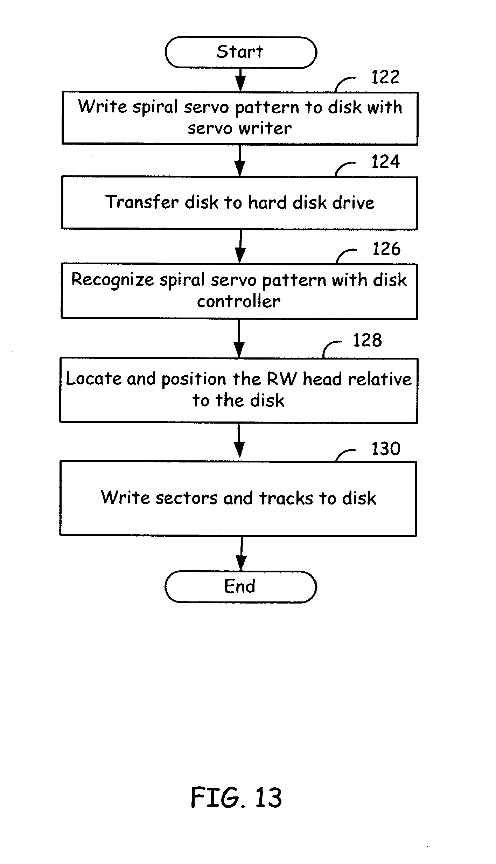

FIG. 13 provides a second logic flow diagram of a process operable to define sectors and tracks within a magnetic disk. This involves writing a spiral reference pattern to the disk with a servo writer in step 122. This disk is then transferred from the servo writer to a hard disk drive in step 124. The disk controller of the hard disk drive is operable to recognize the spiral reference pattern and gray coded SSMs in step 126. In step 128, the hard disk drive controller is then operable to locate and direct the positioning of the RW head within the hard disk drive based on the relative velocity and phase between the RW head and SSMs within the spiral reference pattern. By accurately positioning the RW head, a sectors and tracks may be written to the disk in step 130. During this writing process, the RW head location is determined based on the velocity and phase between the RW head and the first magnetic reference pattern. This avoids cumulative errors previously associated with SSW processes that determined the location of a subsequent sector and tract based on a previously defined sector and tract.

An apparent industry standard has been set for the maximum pole frequency of the preamp AC coupling (high pass filter = HPF) as Fdata_mm/1000. Note that since this should apply at the drive ID, and the OD data rate is typically 80% higher than the ID rate, then this worst case is significantly relaxed at the OD. One can also expect preamps to be built for a class of products, and any particular HDD is likely to have Fdata_min higher than that of the preamp class assumption. One can also assume that the preamp HPF function will be dominated by a single pole and that the read channel can achieve 10x lower worst case HPF than the preamp (so <= Fdata_min/10,000), such that the dominance of the preamp single pole is not greatly obscured.

The embodiments of the present invention substantially address the need to achieve <= 0.15 dB loss from the complete system of Base Line Control Code (BLCC) and Base Line Control Electronics (BLCE) at the worst case preamp pole of Fdata/1000 and at aggressive high BER (tentative at BER=e-2.5). (Note that the gains from 'DC targets' are only about 1dB in the first place.) Further, embodiments of the present invention substantially address the need to achieve progressively less loss for lower preamp poles. Finally, embodiments of the present invention substantially address the need to 'handle' an even worse 'worst case' of Fdata/500. This is a type of insurance against preamp development problems.

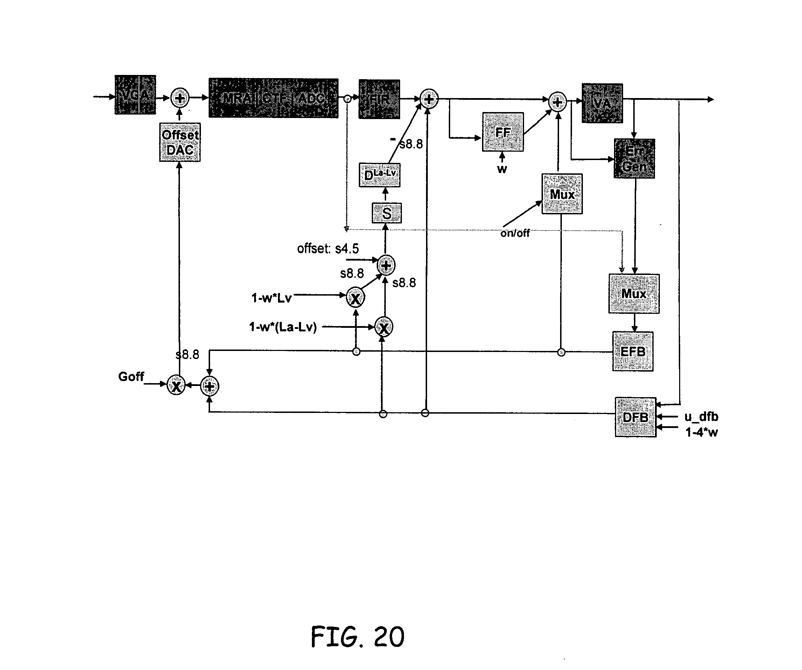

FIG. 20 provides a block diagram in accordance with embodiments in present invention of a baseline correction (BLC) architecture in accordance with embodiments of the present invention. This system solution is to lower the preamp pole. Since one cannot rely on that to happen immediately, one can pursue an analog 'pole canceller' within the analog front end.

For Fhpf=Fdata/1000, given the rather long latencies which exist, Error Feedback will not be effective, and only Decision Feedback will get close to substantially address the above identified needs. As the pole gets to perhaps ~Fdata/4000 then Error Feedback can substantially address the above identified needs.

Again for Fdata/1000, even DFB need a low frequency boost filter, Feedforward Filter, to substantially address the above identified needs.

For a DFB system, the analog (outer loop) and the digital (inner loop around VA) will need to be carefully decoupled. This will require calibrating the analog +FIR DC gains.

For any DFB system the pole in the feedback model must be calibrated.

The analog offset (baseline correction) injection point must be before MRA, because even small errors in baseline hurt MRA Correction significantly.

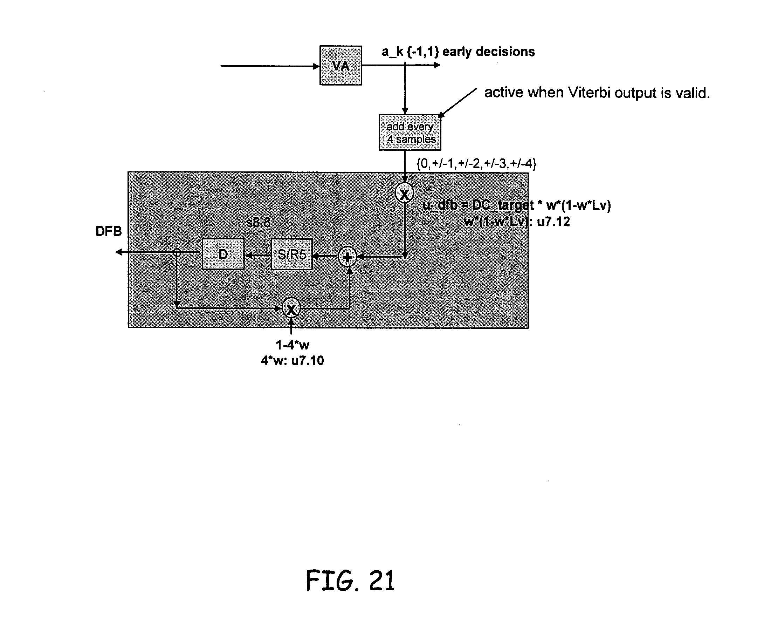

FIG. 21 provides a block diagram of decision feedback equalizer in accordance with embodiments of the present invention. The basic concept of Decision Feed Back (DFB) equalizer here is to subtract out the 'long tails' of error caused by the equivalent analog High Pass Filter. The feedback filter is thus the IIR filter that is just the compliment of the preamp high pass. It's a low pass with pole at the same position.

A practical limitation of DFB here is that one can have very long latency around the analog loop (estimated >= 45 bits), and even the 'short loop' around the DDNP-VA with early decisions is relatively long, estimated at >=25 bits. Denoting the loop latency Lv, it's then clear that the first Lv-1 elements of the 'error tail' can't be cancelled with DFB (but the first tail element needs to be incorporated in the PR1 or other PR target). Note that the feedback filter can still be the simple IIR filter, but its now tempered with a gain term of **g1 = exp(-L/Tau),** where Tau is the time constant of the equivalent HPF in unit delays.

Registers:

| BLC_DFB_RD_EN | [1:1] | RW | BLC DFB READ ENABLE |
| BLC_DFB SV_EN | [5:5] | RW | BLC DFB SERVO ENABLE |
| BLC_DFB_RD_GAIN. | [11:0] | RW | BLC DFB READ GAIN (dc_target*w*(1-w*Lv)) |
| BLC_DFB_SV_GAIN | [23:12] | RW | BLC DFB SERVO GAIN (dc_target*w*(1-w*Lv)) |
| BLC_DFB_FB_RD | [9:0] | RW | BLC DFB READ FEEDBACK GAIN |
| BLC_DFB_FB_SV | [19:10] | RW | BLC DFB SERVO FEEDBACK GAIN |

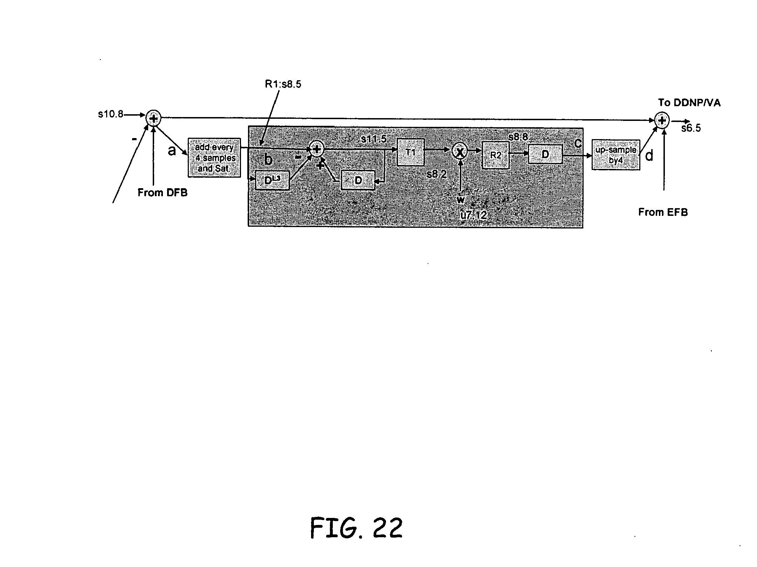

**3. Feed Forward Filter (Low Frequency Boost) with DFE** FIG. 22 provides a feed forward filter in accordance with embodiments of the present invention;

A well understood part of DFE design is to jointly optimize a feed forward filter (FFF) along with the decision driven feedback filter (and one can only considered the feedback filter above). In one case one can don't have too much freedom in selecting the FFF, because embodiments are trying to hit a short PR target for the input to the DDNP-VA. I.e., a decision is not made with a slicer like the traditional DFE, but rather a DFE is used to 'clean up' a PR system.

For simplicity one can assume that the normal FIR achieves a near zero forcing equalization to the desired short target (e.g., PR1) *with the expected HPF tail in addition*. Note that care must be taken with the adaptive FIR error signal to achieve this (else the FIR could be attempting to cancel the tail in its range of influence). One can then want to solve for the FFF which minimizes the distortion at the VA given the DFB with latency L described above.

The FFF filter for these conditions is in general IIR, but for reasonably low poles and/or short DFB latency, is well approximated by a simple to build finite length filter.

For one set of conditions the FFF can be well approximated by the first L-1 taps of the ideal response, which is then

$$Fff(k) = 1*delta(k) +\ 2*pi*Fhp * [\ u(k\text{-}1) - u(k\text{-}L)]$$

This filter can be implemented rather inexpensively with an IIR filter with pole at z=1 (unstable), but being fed by 1-D^L (and taking care for no rounding or truncation such that a zero of the input network exactly cancels the unstable pole)

One can expect that FFF combined with DFB for the 'standard pole' at 1/1000 will perform close to optimal given that the a priori single (dominant) pole model is correct (because the bER driving DFB will be low enough).

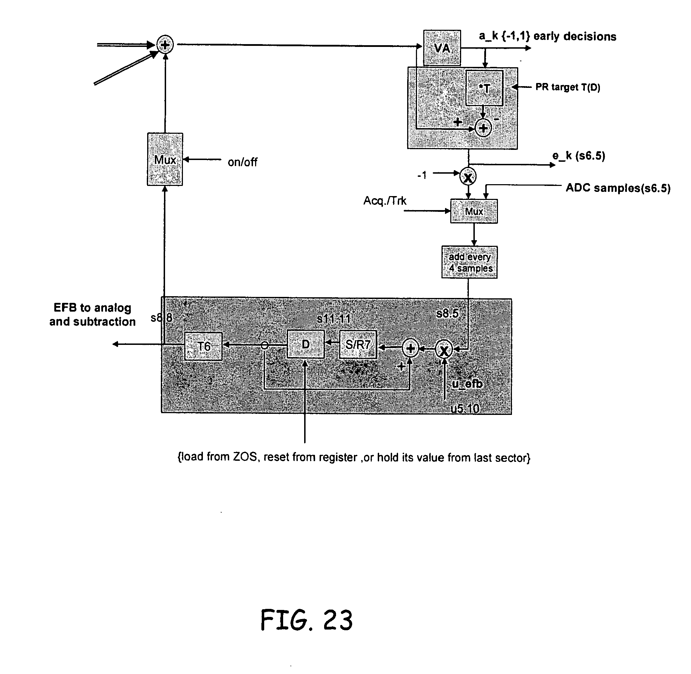

**4. Error Feedback** FIG. 23 provides a block diagram and an error feedback module in accordance embodiment of the present invention.

Error Feedback (EFB) is a simple loop where the relevant error signal (estimate of DC shift = baseline error here) is integrated and fed back.

The digital EFB is a traditional integral control loop with decision directed sample error. This is the same 'sample error' and preliminary decisions which will feed ALL LOOP error gradients (timing, gain, MRA, FIR/Target adapt). The natural point to 'close the loop' is to inject the EFB correction at the input of the VA.

The major advantage over DFB is that EFB is not sensitive to an apriori signal model (there is none).

The major disadvantage is that EFB is limited in ability because of noise enhancement as the bandwidth is increased. In one case, the long latencies of the loop(s) make the achievable bandwidth(s) quite low.

The DFB methods have the inherent advantage that they use the a-priori model of the baseline error (that it comes from a single pole). This is a familiar trend in estimation and detection theory, that full use of such a priori data is needed for optimal performance (and performance can suffer greatly if such information is wrong!)

EFB is motivated by a combination of the following reasons:

1. As a hybrid with DFE, to handle residual from non-perfect a priori information.
2. To handle near static offsets in the analog (similar to 1)
3. As a simpler solution if the analog effective pole is much lower than the 'standard' 1/1000.

For u_efb, one can need two settings: one for acquisition and one for tracking. The higher setting can be used for acquisition. The biggest setting is close to BW= 1/(2^6)/(2*pi)=0.0025=1/400. To reduce the delays in Acquisition, the decision during preamble does not come from Viterbi. It is from the preamble detection.

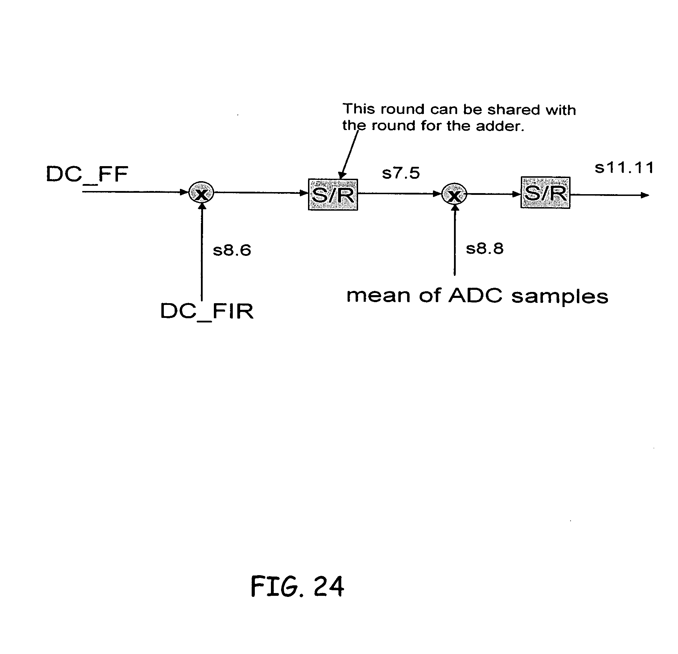

**Zero Offset Start (ZOS):** FIG. 24 provides a block diagram of zero offset start in accordance with embodiments of the present invention; and

During preamble, ADC samples are used to get an initial estimate of the offset. The number of ADC samples used is 8. In order not to interfere with the ZPS for the timing loop, one can will collect the same ADC samples as used with ZPS and update the EFB accumulator at the same time.

The average is multiplied with the DC_FIR=sum(FIR taps) and DC_FFF=1+Lv*w. The final value is loaded to the accumulator: BLC_EFB_RD_INIT_GAIN. This accumulator is RW. BLC_ZOS_RD_EN enables the ZOS. BLC_EFB_RD_INIT_MODE makes the initial value from either the value the user programmed or from the previous sector.

DC_FIR = sum(FIR Coefficients), Saturate to s8.6.

$$DC\_FFF = 1 + w * Lv, \ u8.8$$

offset_gain_adj = DC_FIR * DC_FFF

**EFB to Analog**

Here one can add detail to the EFB concept, particularly the connection between the digital EFB and its application to the analog.

The underlying theory is that the best EFB will be achieved by the loop with the shortest latency, the digital loop (which one can estimate at 20-25 Baud latency), but that the net bandwidth of that loop will be relatively low. One can want to use this loop information to 'help the analog', especially to help the MRA correction, and also to get rid of any static analog offset errors or any other relatively 'slow moving' baselines or offsets.

The 'giant leap' here is to apply the identical correction (properly scaled) to the analog front end, and to identically subtract it out before the digital EFB loop. Thus, the digital EFB can run to its full power, while the analog has been helped 'as much as possible'.

The digital EFB with latency >20 will in a noisy environment run with time constant > 100 Baud. The fact that the analog EFB injection is skewed by up to 20 Baud will have a net small effect.

The first constraint on DC gains is that one can want the same relative amplitude EFB correction applied to the analog as to the digital. By definition the digital EFB is applied with magnitude 1 (the EFB accumulator is added to the VA input). This makes a 'loop gain' constraint that must match this path:

$$G\_off \ * \ G\_dac \ * \ G\_mca \ * \ G\_fir \ * \ G\_ff = 1$$

Where G_ff is the the DC gain of the feedforward filter (between FIR and VA), so

$$G\_off \ = 1/( \ G\_dac \ * \ G\_mca \ * \ G\_fir \ * \ G\_ff \ )$$

The EFB injected into the analog must be subtracted out before the getting to the 'digital EFB loop'. (Note the analog EFB is not really a 'loop', but a carbon copy of digital EFB that one can want to not effect digital EFB). One can choose to inject the subtraction at the output of the FIR (rather than at the output of the FF), because this leads to implementation simplification, and also because it is a 'better space' than at the FF output. Denote the gain of this subtraction injection as G_s. To get complete subtraction one can must have:

$$G\_off \ * \ G\_dac \ * \ G\_mca \ * \ G\_fir \ = \ G\_s,$$

so

$$G\_s = 1 \ / \ G\_ff$$

The DC gain of the FF filter is

$$G\_ff = 1 + w * L\_v,$$

so one can get

$$G\_s = 1/(1+w*Lv) \sim= 1- w*Lv$$

The subtraction injection must also be delayed by the extra analog 'loop' latency (L_a-L_v) to achieve complete cancellation. (La-Lv) is the time to go from EFB signal through the analog path and reach the add/subtract node at the FIR output. The 'analog' path delay includes:

    1. Gain multiplier feeding offset DAC, with DC gain denoted G_off
    2. Offset DAC, denoted G_dac
    3. MRA correction
    4. CTF
    5. ADC, where the DC gain of the MRA + CTF +ADC is denoted G_mca
    6. FIR, including part of adder tree (down to where EFB is subtracted), where the DC gain of the FIR is denoted G_fir

**DFB to Analog** The DFB system is similar in that a fast digital DFB signal is also fed back to the analog and also subtracted out before the digital loop. The DFB core is just a lossy integrator with feedback (1-w), where w is the effective high pass pole in normalized radians, w= 2*pi * Fhp/Fadc. Note that while the analog preamp pole will' be constant, the 'w' in DFB will change with data rate (Fadc). The lossy integrator is fed directly to the FIR output, (input to Feedforward Filter). This matches the earlier derivation in that the FF filter works on the remnant error finite latency DFB and not v.v. In reality the FF filter is a 'small effect' and probably could be commuted, but we'll see that keeping the derived ordering is simpler. The DFB lossy integrator must be scaled, and it is cheapest to do so by scaling the early decisions, ak, because they are on {-1,1}.

The input 'multiplier' is

$$G\_dfbin = G\_target * (1-w)^{\wedge}Lv,$$

Where G _target = Sum(short target coefficients) is the 'DC' in the target,
Where Lv is the latency of the DFB digital loop.

This gain is also a function of w, where 'w' can be approximated as:

$$(1-w)^{\wedge}Lv \sim= 1 - w*Lv$$

The ideal analog DFB has longer latency so it must be further gain scaled by the factor (1-w)^(La-Lv) ~= 1 - w*(La-Lv) which can be easily seen by realizing that the system is further down the exponential tail by the time the feedback arrives.

The subtraction point to cancel out the DFB applied to the analog is also chosen to be the FIR output. The subtraction is just a scaled and delayed version of main DFB signal. The scaling must be exactly the term above, (1-w)^(La-Lv).

Ignoring any constraints / results from the EFB the DC gain constraints around the analog must match the subtraction path gain, so one can have

$$G\_off * G\_dac * G\_mca * G\_fir = (1-w)^{\wedge}(La\text{-}Lv),$$

so

$$G\_off = (1-w)^{\wedge}(La\text{-}Lv) / ( G\_dac * G\_mca * G\_fir ),$$

Which is identical to the derived G_off for EFB derivide above.

Registers:

| BLC_CMP1_RD | [6:0] | RW | BLC COMP1 READ GAIN |
|---|---|---|---|
| BLC_CMP_1 SV | [13:7] | RW | BLC COMP1 SERVO GAIN |
| BLC_CMP2_RD | [20:14] | RW | BLC COMP2 READ GAIN |
| BLC_CMP2_SV | [27:21] | RW | BLC COMP2 SERVO GAIN |
| BLC_GOF_RD_GAIN | [6:0] | RW | BLC GOFF READ GAIN |
| BLC_GOF_SV_GAIN | [13:7] | RW | BLC GOFF SERVO GAIN |

**Operating Modes:**

1. For Perp., all loops running.
2. Only analog offset loop is turn on. This is mainly used for Long. And possibly for Servo. It is the same as the traditional offset loop. Disable DFB and FF filter. Program 1-w*Lv and 1-w*(La-Lv) to zero. Digital EFB is disabled.
3. Same as 2, except digital EFB is enabled.

**Suggested Optimization Procedures:**

1. Set to known data mode.
2. Set Goff=0, 1-w*Lv and 1-w* (La-Lv) to 0.
3. Set u_efB to low bandwidth.
4. Sweep w for the FF, 1-4*w and Udfb=DC_target*w*(1-w*Lv).
5. Fine tune Udfb.
6. Turn on 1-w*Lv and 1-w*(La-Lv) based on w, La and Lv. Fine tune if needed.
7. Sweep Goff.
8. Optimize u_efb with digital feedback on and off.
9. Set to user data. Fine tune u_efb.

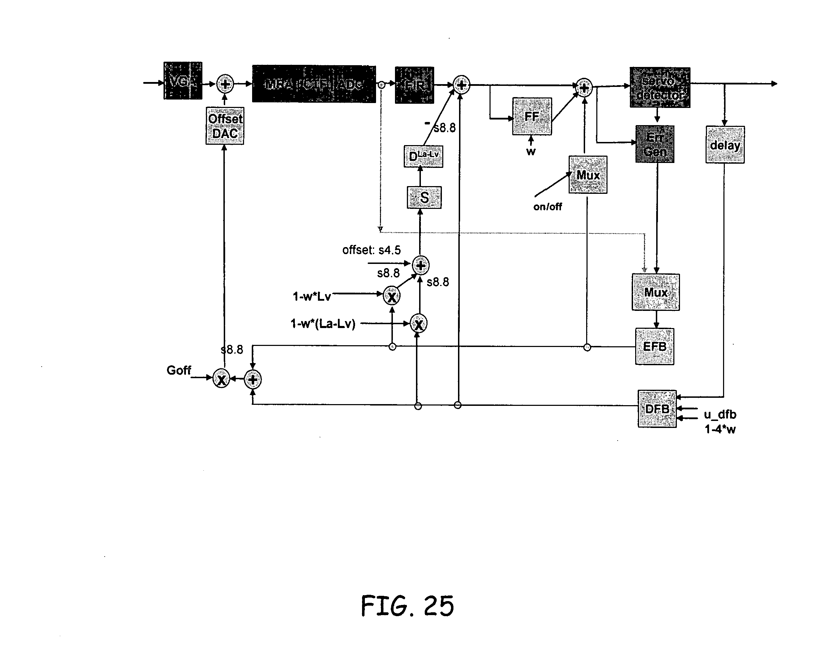

FIG. 25 provides a block diagram of the baseline correction module or servo in accordance an embodiment of the present invention.

As one of average skill in the art will appreciate, the term "substantially" or "approximately", as may be used herein, provides an industry-accepted tolerance to its corresponding term. Such an industry-accepted tolerance ranges from less than one percent to twenty percent and corresponds to, but is not limited to, component values, integrated circuit process variations, temperature variations, rise and fall times, and/or thermal noise. As one of average skill in the art will further appreciate, the term "operably coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of average skill in the art will also appreciate, inferred coupling (i.e., where one element is coupled to another element by inference) includes direct and indirect coupling between two elements in the same manner as "operably coupled". As one of average skill in the art will further appreciate, the term "compares favorably", as may be used herein, indicates that a comparison between two or more elements, items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

Although the present invention is described in detail, it should be understood that various changes, substitutions, and alterations can be made hereto without departing from the spirit and scope of the invention as described by the appended claims.

**Claims**

1. A method to lock data PLL frequency within a Hard Disk Drive (HDD) comprising:

receiving an analog waveform wherein the analog waveform contains representations of synchronization marks read from physical media;
determining a period between synchronization marks within physical media of the HDD;

determining an update rate having both a phase and frequency, wherein the update rate is based on the period between synchronization marks; and
sampling data from the analog waveform based on the update rate.

2. The method of Claim 1, wherein:

a data PLL comprising a delta-sigma modulator PLL wherein the servo PLL receives a digital word as an input
a servo PLL comprising a delta-sigma modulator PLL wherein the servo PLL receives a digital word as an input.

3. The method of Claim 1, wherein determining a period between synchronization marks comprises measuring the period between time of arrival (TOA) of the synchronization marks.

4. A method to limit inter-symbol interference (ISI) within a hard disk drive (HDD) read channel, comprising:

reading an estimated bit sequence from the read channel, wherein the estimated bit sequence comprises:

a preamble, synchronization mark, data and post amble;

determining a set of allowable bit sequences;
performing a timing recovery within the estimated bit sequence to determine a location of within the estimated bit sequence;
pruning the set of allowable bit sequences based on knowledge of the bit sequence; and
comparing the estimated bit sequence to the set of allowable bit sequences to select a decoded bit sequence.

5. The method of Claim 4, wherein pruning the set of allowable bit sequences based on knowledge of the bit sequence further comprises:

pruning the set of allowable bit sequences based on the preamble, wherein the preamble comprises predetermined bit sequences;
pruning the set of allowable bit sequences based on the synchronization mark, wherein the synchronization mark comprises predetermined bit sequences;
pruning the set of allowable bit sequences based on parity of at least one data code word within the data; and
pruning the set of allowable bit sequences based on the post amble, wherein the post amble comprises predetermined bit sequences.

6. The method of Claim 5, wherein pruning the set of allowable bit sequences based on the preamble further comprises pruning based on parity of the preamble.

7. A disk drive controller, comprising:

a read channel operable to read data from storage media;
a data path operable to produce decoded bit sequences from the read channel;
a second interface operable to write the decoded bit sequences to an external device; and

wherein the data path is operable to:

receive an estimated bit sequence comprising a preamble, synchronization mark, data and post amble;
determine a set of allowable bit sequences;
perform a timing recovery within the estimated bit sequence to determine a location within the estimated bit sequence;
prune the set of allowable bit sequences based on knowledge of the ideal bit sequence; and
compare the estimated bit sequence to the set of allowable bit sequences to select the decoded bit sequence.

8. The disk drive controller of Claim 7, wherein the data path pruning the set of allowable bit sequences based on knowledge of the bit sequence further comprises:

pruning the set of allowable bit sequences based on the preamble, wherein the preamble comprises predetermined bit sequences;

pruning the set of allowable bit sequences based on the synchronization mark, wherein the synchronization mark comprises predetermined bit sequences;
pruning the set of allowable bit sequences based on parity of at least one data code word within the data; and
pruning the set of allowable bit sequences based on the post amble, wherein the post amble comprises predetermined bit sequences.

9. The disk drive controller of Claim 8, wherein pruning the set of allowable bit sequences based on the preamble further comprises pruning based on parity of the preamble.

10. The disk drive controller of Claim 8, wherein pruning the set of allowable bit sequences based on parity of at least one data code word within the data further comprises pruning the set of allowable bit sequences based on parity of a plurality of data code words within the data.

Prior Art

FIG. 1

Disk Controller 34

External Servo Writer 30

Head Disk Assembly 32

36

40

38

10

FIG. 2

FIG. 3

Spiral Track

Servo for
SSW: Spiral
track (1:1)

SSM

T 3.4

T 3

T 2.5

T 2

T 1.5

T 1

W 3b  W 4a  W 4b  W 1a  W 1b  W 2a  W 2b  W 3a  W 3b  W 4b  W 1a  W 1b  W 2a  W 2b  W 3a

FIG. 4

EP 1 879 192 A1

Spiral Track 20

SSM
24

Read Path
60

Detected
signal 62

Detected signal
returns to a
minimum value
after the
intersection

Detected signal
reaches a maximum
value as the read path
fully intesects the
spiral track

64

Detected signal
is at a minimum
value prior to
the intersection

Detected signal
increases in amplitude
as the amount of
intersection increases

Detected signal
decreases in
amplitude as the
amount of
intersection
decreases

FIG. 5

FIG. 6

FIG. 7

| | 1,1,1,......,1,1,1,0 | 1,0,0,1,0,....,0,1,1,01,0 | 1,1,1,........,1,1,1,0 | |

Non index "space":

40 1's + 1 0

Gray or Track Number:

32 1's or 0's

Non index "space":

40 1's + 1 0

| | ...,1,1,1,1,1,1......,1,1,1,0, | 1,0,0,1,0,...,0,1,1,01,0 | 1,1,1,........,1,1,1,0,. | |

Index "space":

41 1's + 1 0

Gray or Track Number:

32 1's or 0's

Non index "space":

40 1's + 1 0

FIG. 8

**FIG. 9**

EP 1 879 192 A1

Hard Disk
Drive 50

Head Disk Assembly
32

Disk
Controller
52

54    58

56    10

FIG. 10

Disk Controller
52

| Host computer System | Interface module 35 | Processing module 37 | Memory module 39 |

Actuator
54

FIG. 11

```
        ┌─────────────────────┐
        (       Start          )
        └─────────────────────┘
                   │           ┌─ 102
                   ▼
   ┌─────────────────────────────────────┐
   │  Write first magnetic reference pattern │
   └─────────────────────────────────────┘
                   │           ┌─ 104
                   ▼
   ┌─────────────────────────────────────┐
   │     Transfer disk to hard disk drive    │
   └─────────────────────────────────────┘
                   │           ┌─ 106
                   ▼
   ┌─────────────────────────────────────┐
   │    Recognize first magnetic reference   │
   │                pattern                  │
   └─────────────────────────────────────┘
                   │           ┌─ 108
                   ▼
   ┌─────────────────────────────────────┐
   │  Locate and position the RW head relative │
   │              to the disk                │
   └─────────────────────────────────────┘
                   │           ┌─ 110
                   ▼
   ┌─────────────────────────────────────┐
   │    Write second magnetic reference      │
   │          pattern to disk                │
   └─────────────────────────────────────┘
                   │
                   ▼
        ┌─────────────────────┐
        (         End          )
        └─────────────────────┘
```

# FIG. 12

Start

Write spiral servo pattern to disk with
servo writer
— 122

Transfer disk to hard disk drive
— 124

Recognize spiral servo pattern with disk
controller
— 126

Locate and position the RW head relative
to the disk
— 128

Write sectors and tracks to disk
— 130

End

FIG. 13

Target position $\xrightarrow{\quad}$ + ⊖ − $\xrightarrow{\text{PES}}$ Controller, D(z) $\xrightarrow{\text{U}}$ Plant, P(z) $\xrightarrow{\quad}$ position

PES: Position Error Signal

U: Control Effort

FIG. 14

EP 1 879 192 A1

## Spindle Frequency Run-out Cancellation (servo loop w/ FF)

PES: Position Error Signal

U: Control Effort

FIG. 15

EP 1 879 192 A1

# Rotate A Vector

Assumption: Given a vector A wanted to be rotated by phase q. The result should be A*B given the magnitude of B being 1.0

$$A = Me^{jp}, \quad B = 1.0\, e^{jq}$$

where q = 0, pi/4, pi/2, 3pi/4, pi, 5pi/4 6pi/4, and 7pi/4

$$A*B = {}^*M^*1.0^*e^{j(p+q)}$$

$$= M^*[\cos(p+q) + j^*\sin(p+q)]$$

$$= M^*\{[\cos(p)\cos(q) - \sin(p)\sin(q)] + j^*[\sin(p)\cos(q) + \cos(p)\sin(q)]\} \text{---------} (eq\ 1)$$

$$\Rightarrow \text{Real}(A*B) = M^*[\alpha^*\cos(p) - \beta^*\sin(p)] \text{---------------------------------} (eq\ 2.a)$$

$$\Rightarrow \text{Imag}(A*B) = M[\alpha^*\cos(p) + \beta^*\sin(p)] \text{---------------------------------} (eq\ 2.b)$$

By selecting $\alpha$ (+/-/0) for cosine term and $\beta$ (+/-/0) for sine term, system can rotate learned run-out (from DFT) with 45 degree resolution.

FIG. 16

EP 1 879 192 A1

| | Cos(q) | Sin(q) | Cos(q)" or a | Sin(q)' or ß |
|---|---|---|---|---|
| Q = 0 | 1 | 0 | 1 | 0 |
| Q = pi/4 | 0.707 | 0.707 | 1* | 1* |
| Q = pi/2 | 0 | 1 | 0 | 1 |
| Q = 3pi/4 | -0.707 | 0.707 | -1* | 1* |
| Q = pi | -1 | 0 | -1 | 0 |
| Q = 5pi/4 | -0.707 | -0.707 | -1* | -1* |
| Q =6pi/4 | 0 | -1 | 0 | -1 |
| Q = 7pi/4 | 0.707 | -0.707 | 1* | -1* |

\* Additional gain = 1/0.707

FIG. 17

EP 1 879 192 A1

Nx FF (Learning) Functional Diagram

FIG. 18

# Nx FF (Application) Functional Diagram

Servo Sector/Wedge

Arithmetic shifted Learned FF (cosine)

Arithmetic shifted Learned FF (sine)

FF output

FIG. 19

EP 1 879 192 A1

FIG. 20

FIG. 21

FIG. 22

FIG. 23

a_k {-1,1} early decisions

PR target T(D)

e_k (s6.5)

ADC samples(s6.5)

Acq./Trk

Mux

on/off

add every 4 samples

EFB to analog and subtraction

s11.11

s8.5

T6    D    S/R7    u_efb    u5.10

{load from ZOS, reset from register ,or hold its value from last sector}

EP 1 879 192 A1

FIG. 24

EP 1 879 192 A1

FIG. 25

**European Patent Office**

**DECLARATION**

which under Rule 45 of the European Patent Convention shall be considered, for the purposes of subsequent proceedings, as the European search report

Application Number

EP 07 01 0402

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>G11B20/10 |

No meaningful search is possible. The claims are not supported by the description and as such it is not possible to know what features and/or which problem(s) should be searched. A PLL does not appear in the description or in the figures, only in the part repeating the words of the claims. There is neither a bit sequence comprising a preamble, synchronization mark, data and post amble, nor a timing recovery described.

The applicant's attention is drawn to the fact that a search may be carried out during examination following a declaration of no search under Rule 45 EPC, should the problems which led to the declaration being issued be overcome (see EPC Guideline C-VI, 8.5).
-----

| Place of search | Date | Examiner |
|---|---|---|
| The Hague | 18 October 2007 | Brunet, Laurence |

EPO FORM 1504 (P04C37)